# EUROPEAN PATENT SPECIFICATION

(11) **EP 0 558 545 B1**
(45) Date of publication and mention of the grant of the patent: **25.01.1995**
(21) Application number: 91919969.5
(22) Date of filing: 19.11.1991
(51) Int. Cl.: B65B 13/18, B65G 47/244

(54) **BUNDLE TURNING UNIT OF THE IN-LINE TYPE**
BÜNDELDREHVORRICHTUNG ZUM EINSETZEN INNERHALB EINER FÖRDERLINIE
DISPOSITIF DE ROTATION DE PAQUETS UTILISE DANS UNE LIGNE DE CONVOYEURS

(30) Priority: 22.11.1990 GB 9025454
(43) Date of publication of application: 08.09.1993
(73) Proprietor: PAKSEAL INDUSTRIES LIMITED, Maidenhead, Berkshire SL6 7DB (GB)
(72) Inventor: BEASLEY, Peter George, Maidstone, Kent ME15 OJL (GB)
(74) Representative: Spall, Christopher John
(86) International application number: GB9102048
(87) International publication number: WO9209481

(56) References cited:
- DE-A- 4 007 264
- US-A- 3 901 138
- US-A- 4 519 493

## Description

This invention relates to bundle turning units of the in-line type for use in turning a bundle through substantially 90° with respect to the direction of feed movement of the bundle on a transit conveyor.

Bundle turning units may be disposed between two strapping machines. A bundle having been strapped in a first direction by one machine can then be turned through 90° by the unit to enable it to be strapped in a second direction at 90° to the first by the other machine.

Bundle turning units of the in-line type including turntables are already known. Such turntables may be of the grid or moving head type. In such known constructions the grid and the moving head, respectively, each rise above the level of the transit conveyor. This leaves gaps which may constitute a hazard for an operator, and may cause damage to the bundle.

Document SU-1087-433 discloses a unit according to the preamble of claim 1.

According to our invention a bundle turning unit of the in-line type comprises the features of claim 1.

The annular design of the accessible part of the lift member and the fact that the lift member projects through an opening in the platen which is of complementary outline ensures that nothing of any substantial size can be caught and damaged by the lift member retracting.

In the lowered retracted position a bundle is fed to the turntable in a feed direction until it is superimposed over the lift member at an orientation station. The bundle is then raised above the platen by movement of the lift member into the operative position, and the lift member can then be moved angularly to rotate the bundle through a corresponding angular distance, suitably 90°, whereafter the lift member is returned to its lowered position, with the bundle supported by the platen for transfer from the turntable in a direction corresponding to the feed direction.

The platen surrounded by the opening can be used to accommodate a transit conveyor system operable following orientation of the bundle, at least to assist transfer of the bundle from the turntable after the lift member has returned to its retracted position.

The orientation station may be defined by stop means for arresting forward movement of the bundle in the feed direction and which is conveniently located to the side of the lift member remote from feed direction.

In this way the bundle can be positively positioned relative to the lift member prior to it lifting the bundle.

The stop means may comprise a barrier which is normally upstanding from the platen for co-operation by the leading edge of the bundle to position the bundle relative to the lift member, but which is retractable into the platen to avoid contact with the bundle as it is being rotated and subsequently transferred from the turntable.

Preferably the barrier is constituted by a pair of positioning posts which are spaced transversely with respect to the feed direction.

The movements of the lift member, the barrier, and the transit conveyor take place in a continuous sequence of which operation is initiated by sensing means sensing the position of the bundle. The sensing means initially cause the barrier to rise into an arresting position whereafter, when the bundle co-operates with the barrier, the lift member rises, the barrier retracts into the platen, and the lift member then rotates the bundle through substantially 90° before lowering it onto the transit conveyor, which then becomes operable to transfer the bundle from the turntable.

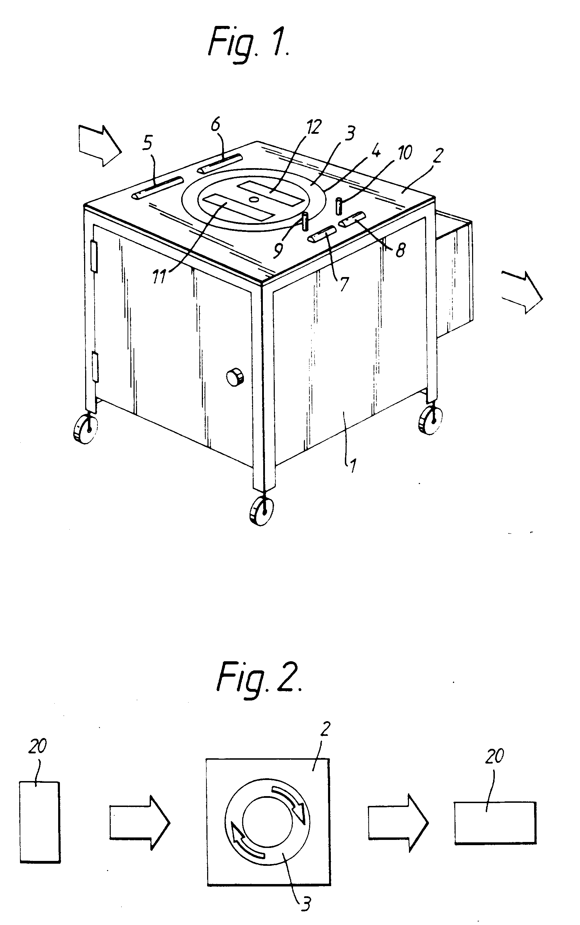

One embodiment of our invention is illustrated in the accompanying drawings in which:-
Figure 1 is a perspective view of a bundle turning unit of the in-line type;
Figure 2 illustrates, schematically, the steps of turning a bundle through substantially 90°;
Figure 3 is a top perspective view of the turning unit of Figure 1 with a bundle omitted;
Figure 4 is a view similar to Figure 3 but with a bundle arrested by positioning posts; and
Figure 5 illustrates the rotatable lift member in the raised position.

The bundle turning unit illustrated in the accompanying drawings comprises a wheel mounted free standing base unit 1 adapted to be positioned between the output end of a input or feed conveyor, and the input end of an output conveyor. The top surface of the base unit 1 is constituted by a platen 2 in the form of a rigid metal plate which is disposed in a common, generally horizontal, plane with the planes of the input and output conveyors.

A lift member 3 of annular section is mounted in the unit for rotation substantially through 90° in either a clockwise or an anti-clockwise direction, and for movement between a retracted position in which it is substantially flush with the plane of the platen 2 and a raised operative position in which it projects above the plane through an opening 4 of complementary annular outline in the platen 2.

A pair of input rollers 5, 6 are freely rotatably mounted in a region of the platen 2 between the input end and the lift member 3 with their axes of rotation aligned in a direction normal to the feed from the input conveyor. The rollers 5, 6 project slightly above the plane of the platen 2.

A similar pair of output rollers 7, 8 are rotatably mounted in the platen 2 in a region between the lift member 3 and the output end of the platen with their axes of rotation aligned and lying in a direction parallel to the axes of the rollers 5, 6. Again the rollers 7, 8 project slightly above the plane of the platen 2.

Stop means comprising a barrier is constituted by a pair of upstanding retractable positioning posts 9, 10. The posts 9, 10 project through the platen 2 and are disposed between the lift member 3 and the rollers 7, 8. The posts 9, 10 lie on a transverse axis of the platen which is spaced between and is parallel to the axes of rotation of the two pairs of rollers.

A transit conveyor system comprising a pair of endless belt conveyors 11, 12 is housed in the circular area of the platen 2 defined within the lift member 3. The two conveyors 11, 12 are symmetrically arranged, being aligned transversely and spaced to opposite sides of the diameter of the lift member 3. The direction of travel of the belts of the two conveyors 11, 12 coincides with the feed direction of the input and output conveyors.

The angular movement of the lift member 3, and its movement between the lowered and raised positions, are each controlled by a pneumatic cylinder under the control of a respective solenoid-operated valve, and the movements of the positioning posts 9, 10 between the raised and retracted positions are controlled by a further pneumatic cylinder under the control of a third, similar, solenoid-operated valve. The three valves are operated in a predetermined sequence in responsive to signals from sensing means comprising a photo-electric cell which detects the position of a bundle on the platen.

The output rollers 7, 8, and the conveyors 11, 12 are all continuously driven in a forward direction by an electric motor.

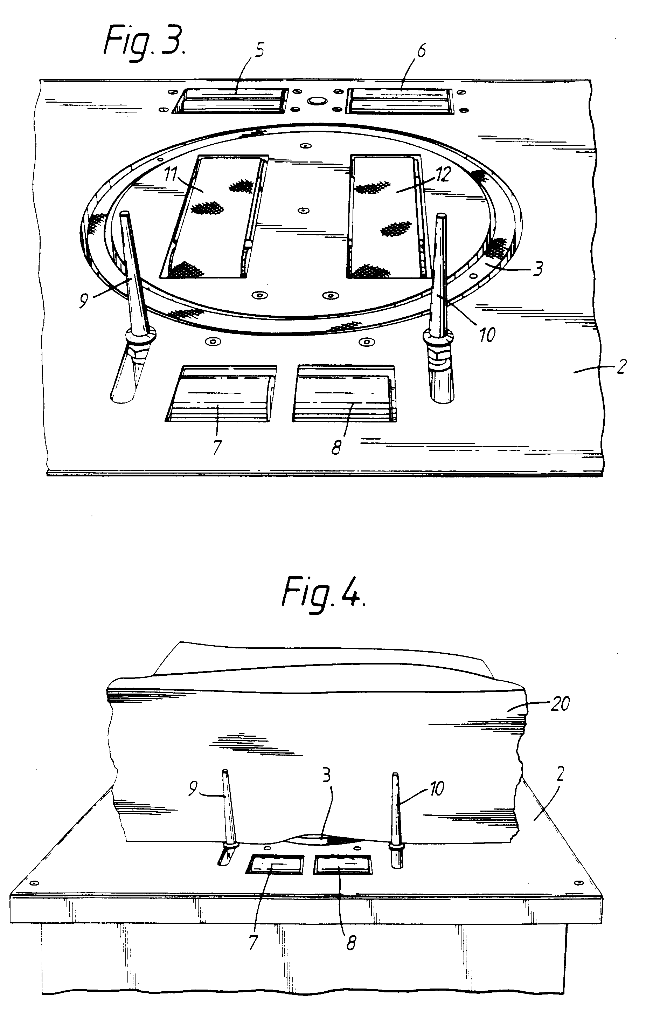

In a normal inoperative position the positioning posts 9, 10 are retracted below the plane of the platen 2, and the lift member 3 is substantially flush with the surface of the platen 2. A bundle is fed to the turning unit by the input or feed conveyor, for example with the bundle having been strapped in a first direction normal to the direction of feed. The position of the bundle is detected by the photo-electric cell which initiates operation of the respective solenoid-operated valve to cause the posts 9, 10 to rise and arrest forward movement of the bundle 20 as shown in Figure 4.

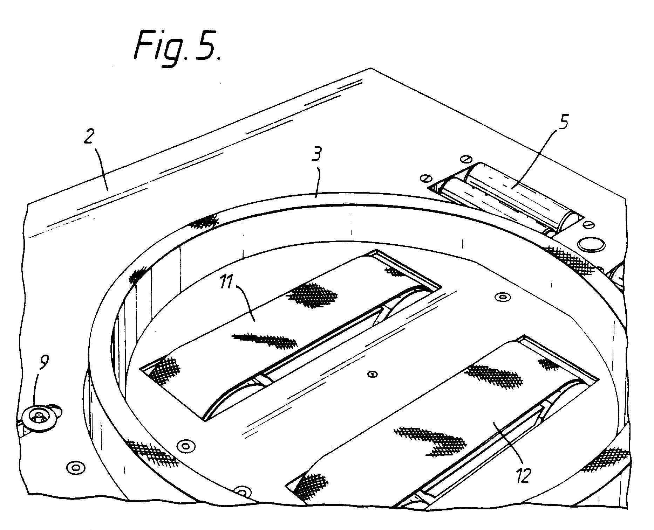

After a time delay, initiated by the photo-electric cell, the lift member 3 is moved into its raised operative position (Figure 5) by operation of the respective solenoid-operated valve, with the third solenoid-operated valve being actuated to cause the posts 9, 10 to be retracted into a retracted position at least substantially flush with the surface of the platen 2. The lift member 3 is raised to a extent sufficient to raise the bundle 20 above the surface of the platen 2, and the remaining solenoid-operated valve is then operable to cause the lift member 3 to move angularly through substantially 90°, in turn orientating the bundle 20 through a corresponding angular distance. The lift member 3 is then returned to its retracted position to lower the bundle 20 onto the conveyors 11, 12 which, in conjunction with the rollers 7, 8, act to move the bundle onto the output conveyor. This can transfer the bundle to a bundle strapping machine arranged to strap the bundle in a second direction, for example at right angles to any first line of strapping.

The lift member 3 is adapted to be rotated through 90° in either a clockwise or an anti-clockwise direction. If desired it may be arranged to rotate alternatively through these two directions.

## Claims

1. A bundle turning unit of the in-line type comprising a turntable in the form of a lift member, the lift member (3) being of annular outline and being housed within a relatively stationary platen (2), the lift member (3) being movable between a raised operative position, in which the lift member (3) can also be moved angularly about an axis normal to and with respect to the platen (2), and a lowered retracted position, the annular lift member extending above and below the plane of the platen when it is in the raised operative position characterised in that the annular lift member projects through an opening (4) in the platen (2), which is of complementary outline.

2. A bundle turning unit according to claim 1, characterised in that a transit conveyor system (11, 12) is provided within the area of the platen (2) which is defined by the opening (4) for the lift member (3).

3. A bundle turning unit according to claim 1, provided with stop means (9, 10) for arresting forward movement of the bundle in the feed direction, characterised in that the stop means (9,10) are located so as to arrest the bundle when the bundle is substantially above the lift member (3).

4. A bundle turning unit according to claim 3, characterised in that the stop means (9, 10) are located to the side of the lift member (3) remote from the feed direction.

5. A bundle turning unit according to claim 3, characterised in that the stop means (9, 10) comprise a barrier which is upstanding from the platen (2) for co-operation by the leading edge of the bundle to position the bundle relative to the lift member (3), and which is retractable into the platen (2) to avoid contact with the bundle as it is being rotated and subsequently transferred from the turntable.

6. A bundle turning unit according to claim 5, characterised in that the barrier comprises a pair of positioning posts (9, 10) which are spaced transversely with respect to the feed direction.

7. A bundle turning unit according to claim 5, characterised by sensing means for sensing the position of the bundle, in which the movements of the components take place in a continuous sequence which is initiated by the sensing means.

8. A bundle turning unit according to claim 7, characterised in that the sensing means is a photoelectric cell.

## Patentansprüche

1. Bündeldrehvorrichtung zum Einsatz innerhalb einer Förderlinie, mit einem Wendetisch in der Form eines Hebeglieds (3), wobei das Hebeglied (3) einen ringförmigen Grundriß aufweist und innerhalb eines relativ zu ihm stillstehenden Tisches (2) untergebracht ist, wobei das Hebeglied (3) zwischen einer angehobenen Betriebsstellung, in welcher das Hebeglied (3) auch hinsichtlich seiner Winkellage um eine senkrecht in Bezug auf den Tisch (2) verlaufende Achse bewegt werden kann, und einer abgesenkten, eingezogenen Position verlagerbar ist, wobei sich das ringförmige Hebeglied oberhalb und unterhalb der Ebene des Tisches erstreckt, wenn es sich in der angehobenen Betriebsstellung befindet, dadurch gekennzeichnet, daß das ringförmige Hebeglied aus einer Öffnung (4) des Tisches (2) herausragt, welche einen komplementären Grundriß aufweist.

2. Bündeldrehvorrichtung nach Anspruch 1, dadurch gekennzeichnet, daß ein Durchgangsfördersystem (11,12) in dem Gebiet des Tisches (2), welches durch die Öffnung (4) für das Hebeglied (3) begrenzt ist, vorgesehen ist.

3. Bündeldrehvorrichtung nach Anspruch 1, ausgerüstet mit Stoppmitteln (9,10) zum Anhalten der Vorwärtsbewegung des Bündels in der Förderrichtung, dadurch gekennzeichnet, daß die Stoppmittel (9,10) so angeordnet sind, daß sie das Bündel anhalten, wenn das Bündel sich im wesentlichen oberhalb des Hebeglieds (3) befindet.

4. Bündeldrehvorrichtung nach Anspruch 3, dadurch gekennzeichnet, daß die Stoppmittel (9,10) seitlich, in Förderrichtung jenseits des Hebeglieds (3) angeordnet sind.

5. Bündeldrehvorrichtung nach Anspruch 3, dadurch gekennzeichnet, daß die Stoppmittel (9,10) eine Barriere umfassen, welche sich von dem Tisch (2) aufrecht erstreckt, um das Bündel relativ zu dem Hebeglied (3) durch Zusammenwirken mit dem vorauseilenden Rand des Bündels zu positionieren, und welche in den Tisch (2) zurückziehbar ist, um Kontakt mit dem Bündel zu vermeiden, wenn dieses gedreht und schließlich von dem Wendetisch übergeben wird.

6. Bündeldrehvorrichtung nach Anspruch 5, dadurch gekennzeichnet, daß die Barriere ein Paar Positionierstäbe (9,10) umfaßt, welche quer in Bezug auf die Förderrichtung beabstandet sind.

7. Bündeldrehvorrichtung nach Anspruch 5, gekennzeichnet durch eine Sensoreinrichtung zur Bestimmung der Position des Bündels, wobei die Bewegungen der Komponenten in einer kontinuierlichen Abfolge stattfinden, welche durch die Sensoreinrichtung eingeleitet werden.

8. Bündeldrehvorrichtung nach Anspruch 7, dadurch gekennzeichnet, daß die Sensoreinrichtung eine fotoelektrische Zelle ist.

## Revendications

1. Unité pour faire pivoter des paquets, du type en ligne, comprenant un plateau rotatif réalisé sous la forme d'un dispositif de soulèvement, le dispositif de soulèvement (3) possédant un contour annulaire et étant logé dans une platine (2) fixe de façon relative, le dispositif de soulèvement (3) étant déplaçable entre une position active soulevée, dans laquelle le dispositif de soulèvement (3) peut être également déplacé angulairement par rapport à la platine (2), autour d'un axe perpendiculaire à cette dernière, et une position abaissée rétractée, le dispositif de soulèvement annulaire s'étendant au-dessus et en-dessous du plan de la platine quand il est en position active soulevée caractérisée en ce que le dispositif de soulèvement annulaire fait saillie à travers une ouverture (4) ménagée dans la platine (2) ; qui possède un contour complémentaire.

2. Unité pour faire pivoter des paquets selon la revendication 1, caractérisée en ce qu'un système formant convoyeur de transit (11, 12) est prévu dans la zone de la platine (2) qui est définie par l'ouverture (4) pour le dispositif de soulèvement (3).

3. Unité pour faire pivoter des paquets selon la revendication 1, équipée de moyens de butée (9, 10) pour bloquer un mouvement d'avance du paquet dans la direction d'avance, caractérisée en ce que les moyens de butée (9, 10) sont disposés de manière à arrêter le paquet lorsqu'il est situé nettement au-dessus du dispositif de soulèvement (3).

4. Unité pour faire pivoter des paquets selon la revendication 3, caractérisée en ce que les moyens de butée (9, 10) sont situés sur le côté du dispositif de soulèvement (3) qui est situé à distance de la direction d'avance.

5. Unité pour faire pivoter des paquets selon la revendication 3, caractérisée en ce que les moyens de butée (9, 10) comprennent une barrière qui fait saillie vers le haut à partir de la platine (2) de manière à coopérer avec le bord avant du paquet pour positionner le paquet par rapport au dispositif de soulèvement (3) et qui peut être rétractée dans la platine (2) afin d'éviter un contact avec le paquet, lorsque celui-ci tourne et est transféré ensuite à partir du plateau rotatif.

6. Unité pour faire pivoter des paquets selon la revendication 5, caractérisée en ce que la barrière comporte un couple de tiges de positionnement (9, 10) qui sont espacées transversalement par rapport à la direction d'avance.

7. Unité pour faire pivoter des paquets selon la revendication 5, caractérisée par des moyens de détection servant à détecter la position du paquet, et dans laquelle les déplacements des composants s'effectuent selon une séquence continue qui est déclenchée par les moyens de détection.

8. Unité pour faire pivoter des paquets selon la revendication 7 caractérisée en ce que les moyens de détection sont constitués par une cellule photoélectrique.
